# EUROPÄISCHE PATENTSCHRIFT

(11) **EP 1 495 221 B1**
(45) Veröffentlichungstag und Bekanntmachung des Hinweises auf die Patenterteilung: **23.02.2011**
(21) Anmeldenummer: 03724853.1
(22) Anmeldetag: 26.03.2003
(51) Int. Cl.: F02D 41/22, F02D 41/16

(54) **VERFAHREN UND VORRICHTUNG ZUR STEUERUNG EINER BRENNKRAFTMASCHINE**
METHOD AND DEVICE FOR CONTROLLING AN INTERNAL COMBUSTION ENGINE
PROCEDE ET DISPOSITIF POUR ASSURER LA COMMANDE D'UN MOTEUR A COMBUSTION INTERNE

(30) Priorität: 08.04.2002 DE 10215408; 23.01.2003 DE 10302455
(43) Veröffentlichungstag der Anmeldung: 12.01.2005
(73) Patentinhaber: ROBERT BOSCH GMBH, 70442 Stuttgart (DE)
(72) Erfinder: EDLER VON SCHWERTFUEHRER, Gerit, 71642 Ludwigsburg (DE); BIESTER, Juergen, 71034 Boeblingen (DE); PITZAL, Volker, 73550 Waldstetten/Wissgoldingen (DE)
(86) Internationale Anmeldenummer: PCT/DE2003/000985
(87) Internationale Veröffentlichungsnummer: WO 2003/085248

(56) Entgegenhaltungen:
- WO-A-00/42307
- DE-A- 4 302 483
- DE-A- 10 043 689

## Beschreibung

Die Erfindung betrifft ein Verfahren und eine Vorrichtung zur Regelung einer Brennkraftmaschine.

Es sind Überwachungen für Steuerungen von Brennkraftmaschinen bekannt, die als redundante Schubüberwachung ausgeführt sind. Dabei wird überwacht, ob bei einem Fahrpedalwinkel von 0°, also dem Betrieb im Motorschub, oberhalb der maximalen Leerlaufreglereingriffsdrehzahl keine unerlaubte Einspritzung erfolgen. Im Fehlerfall, also bei unerlaubter Einspritzung bei fehlendem Fahrerwunsch, wird eine Fehlerreaktion durchgerührt.

Aus der WO 00/42307 A ist ein Verfahren zur Steuerung einer Brennkraftmaschine bekannt, bei dem eine erste Größe vorgegeben wird, die das angefordertes Moment charakterisiert. Eine zweite Größe charakterisiert das zulässige Moment. Ausgehend von dem Vergleich zwischen der ersten und der zweiten Größe wird auf Fehler erkannt. Die zweite Größe weist in wenigstens 2 Drehzahlbereichen unterschiedliche Abhängigkeiten von der Drehzahl auf.

Um bei einer Steuerung einer Brennkraftmaschine eine kontinuierliche Überwachung oberhalb der Solldrehzahl des Leerlaufreglers (LLR) implementieren zu können, so muss auch bei aktivem Leerlaufreglereingriff eine Plausibilisierungsmöglichkeit des Leerlaufreglermoments existieren.

Die Aufgabe der Erfindung ist eine Gewährleistung der Überwachungsmöglichkeit des Leerlaufreglereingriffsmoments unterhalb der maximalen Leerlaufreglereingriffsdrehzahl.

In dem Ermöglichen einer Überwachung innerhalb des Leerlaufregler-Arbeitsbereiches liegt Hauptvorteil der Erfindung. Die Sicherheit des Systems zur Steuerung einer Brennkraftmaschine kann durch die erfindungsgemäße Vorgehensweise erhöht werden.

Die beschriebene Vorgehensweise erfüllt die gestellte Aufgabe ressourcenschonend. Im Gegensatz zur Möglichkeit, den kompletten Leerlaufregler zur Überwachung funktional zu übernehmen, benötigt die Erfindung weniger Speicherplatz und Laufzeit im Steuergerät.

### Zeichnung

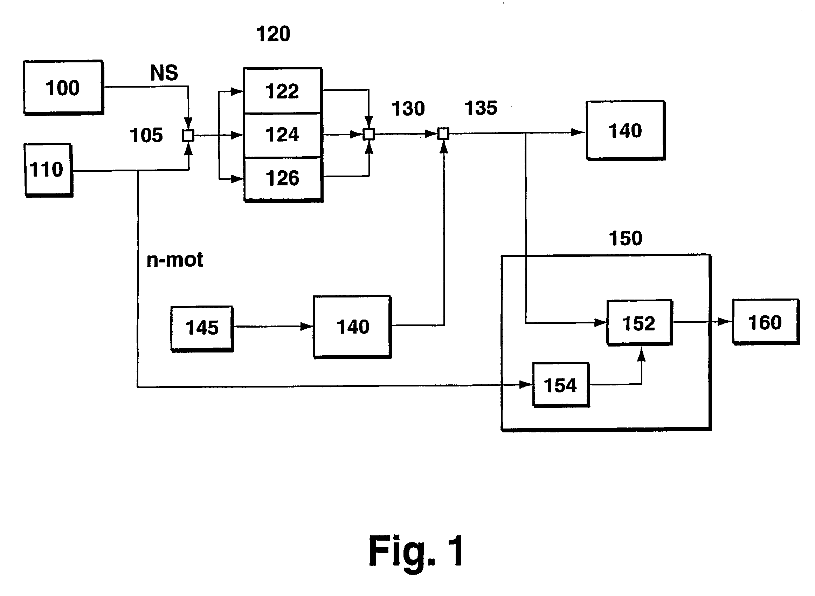

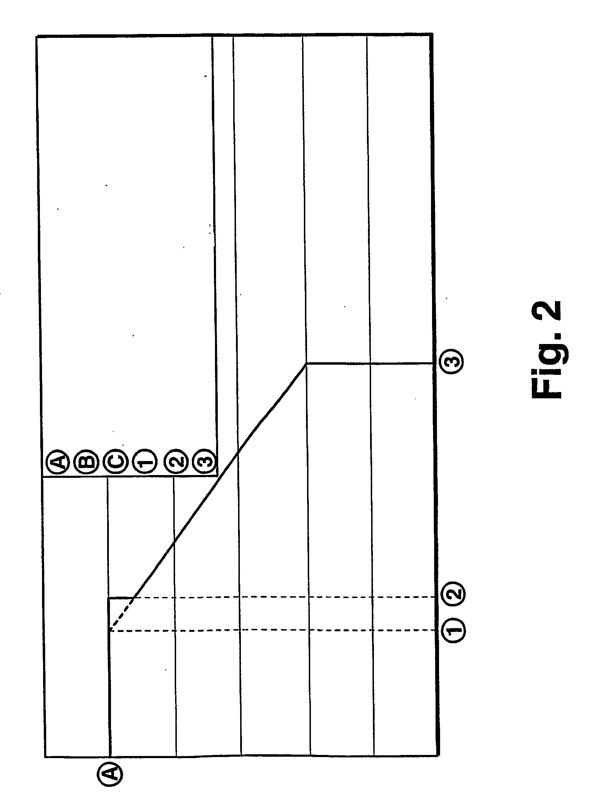

Die Erfindung wird nachstehend anhand der in der Zeichnung dargestellten Ausführungsformen erläutert. Es zeigen Figur 1 ein Blockdiagramm des Systems der erfindungemäßen Vorgehensweise und in den Figuren 2 bis 4 ist jeweils eine Momentengröße über der Drehzahl aufgetragen.

In Figur 1 sind die wesentlichen Elemente der erfindungemäßen Vorgehensweise anhand eines Blockdiagramms dargestellt. Eine Sollwertvorgabe 100 beaufschlagt einen Verknüpfungspunkt 105 mit einem Sollwert NS. Der Sollwert NS wird im folgenden auch als erster Drehzahlwert bezeichnet. Ein Drehzahlgeber 110 beaufschlagt den Verknüpfungspunkt 105 mit einem Istwert n_mot für die Drehzahl der Prädikatsmaschine n_mot. Mit dem Ausgangssignal des Verknüpfungspunktes 105 wird ein Leerlaufregler 120 beaufschlagt. Der Leerlaufregler 120 beinhaltet einen integralen Anteil 122, einen proportionalen Anteil 124 sowie einen zu mindestens differenziales Verhalten 126. Mit den einzelnen Ausgangssignalen der einzelnen Anteile wird ein Verknüpfungspunkt 130 beaufschlagt. Der Leerlaufregler 120 besteht vorzugsweise im wesentlichen aus 3 Einzelreglern, einem I-Regler, einem P-Regler und einem DT1-Regler. Im Betrieb werden die Parameter der Regler zustandsabhängig variiert.

Das vom Leerlaufregler geforderte Moment setzt sich aus der Summe der Ausgänge der drei Regler zusammen. Das Ausgangssignal des Verknüpfungspunktes 130 gelangt zu einem weiteren Verknüpfungspunkt 135. An dem zweiten Eingang des Verknüpfungspunktes 135 liegt das Ausgangssignal einer Mengenvorgabe 140. Der Mengenvorgabe 140 wird das Ausgangssignal einer Fahrerwunschvorgabe 145 zugeleitet.

Die Fehlerüberprüfung erfolgt vorzugsweise in den Betriebszuständen, in denen das Ausgangssignal der Mengenvorgabe 140 den Wert Null annimmt. In diesen Betriebszuständen wird üblicherweise überprüft, ob das geforderte Moment den Wert Null annimmt.

Ist die Drehzahl größer als die Drehzahlschwelle 3, so ist der Leerlaufregler nicht aktiv. Diese Drehzahlschwelle 3 wird auch als Schwelldrehzahl für den Eingriff des P-Anteils und des I-Anteils oder als dritter Drehzahlwert bezeichnet. Fällt die Drehzahl unter die Drehzahlschwelle 3, so regeln der I-Anteil und der P-Anteil des Leerlaufreglers 120. Fällt die Drehzahl unter eine Drehzahlschwelle 2, beginnt der DT1-Anteil des Leerlaufreglers zu regeln. Die Drehzahlschwelle 2 wird auch als zweiter Drehzahlwert bezeichnet.

Mit dem Ausgangssignal des Verknüpfungspunktes 135 wird ein Stellelement 140 beaufschlagt. Bei dem Stellelement 140 handelte sich um ein Stellelement zur Beeinflussung der von der Brennkraftmaschine abgegebenen Moments. Dabei handelt es sich insbesondere um ein Stellelement zur Beeinflussung der der Brennkraftmaschine zugeführten Luftmenge und/oder der der Brennkraftmaschine zugeführten Kraftstoffmenge. Als Stellelemente werden beispielsweise eine Drosselklappe und/oder ein Kraftstoffmengen bestimmendes Stellelement eingesetzt.

Bei der Fahrerwunschvorgabe 145 handelt es sich vorzugsweise um einen Fahrpedalstellungsgeber. Alternativ und/oder ergänzend kann die Fahrerwunschvorgabe 145 als Fahrgeschwindigkeitsregler ausgebildet sein. Die Fahrerwunschvorgabe 145 gibt ein Signal vor, das das vom Fahrer gewünschte Moment charakterisiert.

Das gewünschte Moment MS gelangt ferner zu einer Überwachung 150. Dieser Überwachung wird neben weiteren möglichen Größen die Drehzahl n_mot zugeführt. Die Überwachung beinhaltet einen Vergleicher 152 und eine Hüllkurvenvorgabe 154. Der Hüllkurvenvorgabe 154 wird wenigstens die Drehzahl n_mot zugeführt. Deren Ausgangssignal entspricht dem maximal plausiblen Moment M_zul, das abhängig von zumindestens der Drehzahl der Brennkraftmaschine vorgebbar ist. Das plausible Moment M_zut wird auch als zulässige Moment oder zweite Größe bezeichnet.

Das maximal plausible Moment M_zul gelangt zusammen mit dem gewünschten Moment MS zu dem Vergleicher 152. Erkennt der Vergleicher 152, dass das gewünschte Moment MS größer ist als das maximal plausible Moment M_zul, so erkennt die Überwachung 150 auf Fehler.

Bei einem erkannten Fehler wird ein entsprechendes Signal an eine Fehleranzeige 160 übermittelt, und damit dem Fahrer angezeigt. Alternativ oder ergänzend ist vorgesehen, das bei einem erkannten Fehler ein Notfahrbetrieb oder eine Notabschaltung eingeleitet wird.

Überschreitet das vom Leerlaufregler geforderte Moment das maximal plausible Moment M_zul, dargestellt durch eine Hüllkurve, so wird auf ein fehlerhaftes Verhalten des Leerlaufregler geschlossen. Eine Fehlerreaktion kann dann eine unzulässige Momentenerhöhung verhindern.

Die Vorgabe und/oder die Abhängigkeit des maximal plausiblen Moments M_zul ist in den folgenden Figuren erläutert.

Bei der in Figur 2 dargestellten ersten Ausführungsform wird folgende Hüllkurve verwende:

| | |
|---|---|
| M_zul = A | für n_mot < 2 |
| M_zul = A - Kp_min*(n_mot - NS) | für 2 < n_mot < 3 |
| M_zul = 0 | für n_mot > 3 |

mit:

| | |
|---|---|
| M_zul: | Zulässiges Leerlaufregler-Eingriffsmoment |
| n_mot: | aktuelle Motordrehzahl |
| Kp_min: | minimaler Proportionalfaktor Kp aller Parametersätze |

Dies bedeutet, dass bei Drehzahlen unter der Drehzahlschwelle 2, die der Drehzahlschwelle entspricht und bei deren Unterschreiten der DT1-Anteil regelt, das maximal plausible Moment M_zul dem maximalen inneren Motormoment A entspricht. Zwischen der Drehzahlschwelle 2 und der Drehzahlschwelle 3, die der Drehzahlschwelle entspricht, bei deren Unterschreiten der I-Anteil und der P-Anteil regeln, hängt das maximal plausible Moment M_zul von der aktuellen Drehzahl n_mot ab. Vorzugsweise ist das maximal plausible Moment abhängig von dem Produkt aus dem Proportionalfaktor Kp des P-Anteils und der Differenz zwischen Sollwert NS und Istwert n_mot der Drehzahl. Dabei ergibt das maximal plausible Moment M_zul aus dem maximalen inneren Moment A vermindert um das Produkt aus dem Proportionalfaktor Kp des P-Anteils und der Differenz zwischen Sollwert NS und Istwert n_mot der Drehzahl. Ist die Drehzahl größer als die Drehzahlschwelle 3, so nimmt das maximal plausible Moment den Wert Null an.

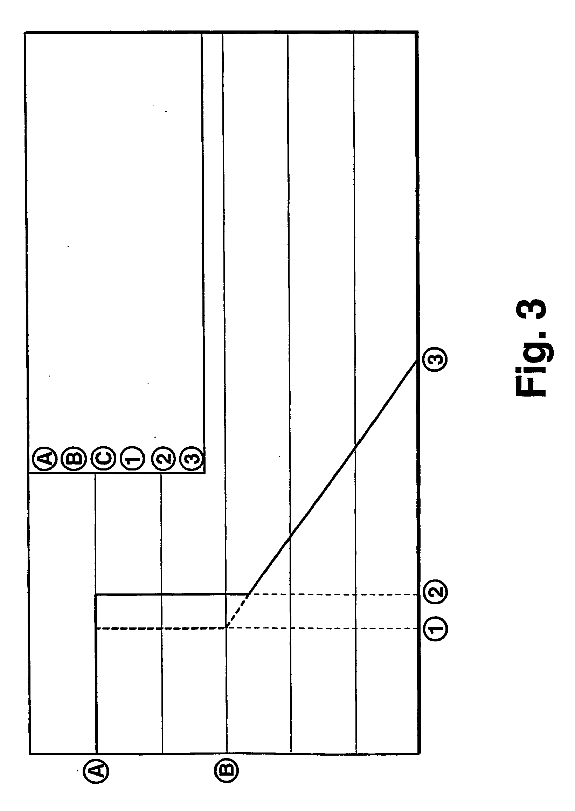

Bei der in Figur 3 dargestellten zweiten Ausführungsform wird der I-Anteil des Leerlaufreglers B anstelle des maximalen Motormoments A als Ausgangspunkt der Hüllkurve angesetzt werden. In diesem Fall berechnet sich die Hüllkurve aus:

| | |
|---|---|
| M_zul = A | für n_mot < 2 |
| M_zul = B - Kp_min*(n_mot - NS) | für 2 < n_mot < 3 |
| M_zul = 0 | für n_mot > 3 |

Im Unterschied zur Ausführungsform gemäß Figur 2 ergibt sich zwischen der Drehzahlschwelle 2 und der Drehzahlschwelle 3 das maximal plausible Moment M_zul aus dem aktuellen I-Anteil B vermindert um das Produkt aus dem Proportionalfaktor Kp_min des P-Anteils und der Differenz zwischen Sollwert NS und Istwert n_mot der Drehzahl. In den übrigen Drehzahlbereichen entspricht das maximal zulässige Moment den Werten der Ausführungsform der Figur 2.

Vorteil der zweiten Ausführungsform gegenüber der ersten Ausführungsform ist ein geringerer Abstand zwischen zulässigem und Istmoment des Leerlaufreglers und damit eine Überwachung höherer Qualität.

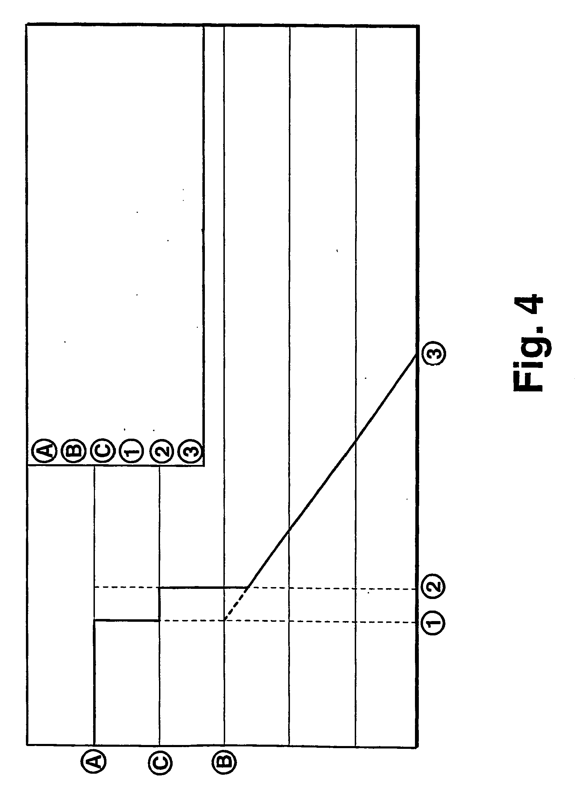

Bei der in Figur 4 dargestellten dritten Ausführungsform wird der Drehzahlbereich zwischen der Drehzahlschwelle 1 und der Drehzahlschwelle 2 genauer überwacht, in dem für kleine Drehzahlschwankungen folgende Hüllkurve angesetzt wird:

| | |
|---|---|
| M_zul = A | für n_mot < NS |
| M_zul = C | für NS<n_mot<2 |
| M_zul = B - Kp_min*(n_mot - NS) | für 2 < n_mot < 3 |
| M_zul = 0 | für n_mot > 3 |

Im Unterschied zur Ausführungsform der Figur 3 ist vorgesehen, dass zwischen der dem Sollwert NS der Leerlaufdrehzahl und der Drehzahlschwelle 2 das maximal plausibles Moment M_zul ausgehend von DT1-Anteil 126 vorgegeben wird. Vorzugsweise ist vorgesehen, dass der aktuelle DT1-Anteil begrenzt und das maximale innere Motormoment um diesen begrenzten Wert verringert wird. Der Vorteil dieser Ausführungsform liegt in einer weitere Ausweitung des überwachten Drehzahlbereichs.

Erfindungsgemäß weist das maximal plausible Moment M_zul in wenigstens zwei Drehzahlbereichen unterschiedliche Abhängigkeiten von der Drehzahl auf.

In einem ersten Bereich nimmt das plausible Moment einen konstanten Wert an. In den beiden ersten Ausführungsformen entspricht der konstante Wert dem Maximalen inneren Moment A. Dieser Wert A wird bei Drehzahlen unterhalb der Drehzahlschwelle 2 als Schwellenwert verwendet. Bei der dritten Ausführungsform werden unterhalb dem Sollwert NS ein erster konstanter Wert und in dem Drehzahlbereich zwischen dem Sollwert NS und der Drehzahlschwelle 2 ein zweiter konstanter Wert, der sich von dem ersten konstanten Wert unterscheidet, vorgegeben.

Zwischen der Drehzahlschwelle 2 und der Drehzahlschwelle 3 besitzt das maximal plausible Moment M_zul eine vorzugsweise lineare Abhängigkeit von der Drehzahl n-mot.

Oberhalb der Drehzahlschwelle 3 nimmt das maximal plausible Moment M_zul den konstanten Wert Null an.

Die erfindungsgemäße Vorgehensweise wurde am Beispiel des Moments beschrieben. Erfmdungsgemäß kann anstelle des Moments auch eine andere Größe, die das Moment charakterisiert verwendet werden. Beispielsweise kann in entsprechender Weise eine Größe verarbeitet werden, die die einzuspritzende Kraftstoffmenge charakterisiert. Vorzugsweise kann die Kraftstoffmenge und/oder die Ansteuerdauer eines Magnetventils und/oder die Ansteuerdauer eines Piezo-Aktors verarbeitet werden.

## Patentansprüche

1. Verfahren zur Steuerung einer Brennkraftmaschine, wobei ein Regler die Drehzahl der Brennkraftmaschine auf einen Sollwert einregelt und eine erste Größe vorgibt, die das vom Regler geforderte Moment charakterisiert, wobei eine zweite Größe, die das zulässige Moment charakterisiert, vorgebbar ist, wobei ausgehend von dem Vergleich zwischen der ersten und der zweiten Größe auf Fehler erkannt wird, wobei die zweite Größe in wenigstens zwei Drehzahlbereichen unterschiedliche Abhängigkeiten von der Drehzahl aufweist, wobei in einem ersten Bereich die zweite Größe einen konstanten Wert annimmt, wobei der erste Bereich durch Drehzahlen definiert ist, die kleiner als ein zweiter Drehzahlwert sind, **dadurch gekennzeichnet, dass** in einem dritten Bereich die zweite Größe von der Differenz zwischen dem Sollwert der Drehzahl und der Drehzahl abhängt, wobei der dritte Bereich durch Drehzahlen definiert ist, die größer als der zweite Drehzahlwert und kleiner als ein dritter Drehzahlwert sind.

2. Verfahren nach Anspruch 1, **dadurch gekennzeichnet, dass** der Regler die Drehzahl der Brennkraftmaschine auf einen Sollwert der Drehzahl einregelt.

3. Verfahren nach Anspruch 1 oder 2, **dadurch gekennzeichnet, dass** der Regler die Drehzahl auf die gewünschte Leerlaufdrehzahl einregelt.

4. Verfahren nach einem der vorherigen Ansprüche, **dadurch gekennzeichnet, dass** in einem zweiten Bereich die zweite Größe einen zweiten konstanten Wert annimmt, wobei der zweite Bereich durch Drehzahlen definiert ist, die größer als ein erster Drehzahlwert und kleiner als der zweite Drehzahlwert sind.

5. Verfahren nach einem der vorherigen Ansprüche, **dadurch gekennzeichnet, dass** in einem vierten Bereich die zweite Größe den Wert Null annimmt, wobei der vierte Bereich durch Drehzahlen definiert ist, die größer als der dritte Drehzahlwert sind.

6. Vorrichtung zur Steuerung einer Brennkraftmaschine, wobei ein Regler die Drehzahl der Brennkraftmaschine auf einen Sollwert einregelt und eine erste Größe vorgibt, die das vom Regler geforderte Moment charakterisiert, mit Mitteln, die eine zweite Größe, die das zulässige Moment charakterisiert, vorgeben, mit Mitteln, die ausgehend von dem Vergleich zwischen der ersten und der zweiten Größe auf Fehler erkennen, wobei die zweite Größe in wenigstens zwei Drehzahlbereichen unterschiedliche Abhängigkeiten von der Drehzahl aufweist, wobei in einem ersten Bereich die zweite Größe einen konstanten Wert annimmt, wobei der erste Bereich durch Drehzahlen definiert ist, die kleiner als ein zweiter Drehzahlwert sind, und **dadurch gekennzeichnet, dass** in einem dritten Bereich die zweite Größe von der Differenz zwischen dem Sollwert der Drehzahl und der Drehzahl abhängt, wobei der dritte Bereich durch Drehzahlen definiert ist, die größer als der zweite Drehzahlwert und kleiner als ein dritter Drehzahlwert sind.

## Claims

1. Method for controlling an internal combustion engine, wherein a closed-loop controller adjusts the rotational speed of the internal combustion engine to a setpoint value and predefines a first variable which characterizes the torque which is requested by the closed-loop controller, wherein a second variable, which characterizes the permissible torque, can be predefined, wherein faults are detected on the basis of the comparison between the first and the second variables, wherein the second variable has dependencies on the rotational speed which are different in at least two rotational speed ranges, wherein in a first range the second variable assumes a constant value, wherein the first range is defined by rotational speeds which are lower than a second rotational speed value, **characterized in that** in a third range the second variable depends on the difference between the setpoint value of the rotational speed and the rotational speed, wherein the third range is defined by rotational speeds which are higher than the second rotational speed value and lower than a third rotational speed value.

2. Method according to Claim 1, **characterized in that** the closed-loop controller adjusts the rotational speed of the internal combustion engine to a setpoint value of the rotational speed.

3. Method according to Claim 1 or 2, **characterized in that** the closed-loop controller adjusts the rotational speed to the desired idling rotational speed.

4. Method according to one of the preceding claims, **characterized in that** in a second range the second variable assumes a second constant value, wherein the second range is defined by rotational speeds which are higher than a first rotational speed value and lower than the second rotational speed value.

5. Method according to one of the preceding claims, **characterized in that** in a fourth range the second variable assumes the value zero, wherein the fourth range is defined by rotational speeds which are higher than the third rotational speed value.

6. Device for controlling an internal combustion engine, wherein a closed-loop controller adjusts the rotational speed of the internal combustion engine to a setpoint value and predefines a first variable which characterizes the torque requested by the closed-loop controller, with means which predefine a second variable which characterizes the permissible torque, with means which detect faults on the basis of the comparison between the first and the second variables, wherein the second variable has dependencies on the rotational speed which are different in at least two rotational speed ranges, wherein in a first range the second variable assumes a constant value, wherein the first range is defined by rotational speeds which are lower than a second rotational speed value, and **characterized in that** in a third range the second variable depends on the difference between the setpoint value of the rotational speed and the rotational speed, wherein the third range is defined by rotational speeds which are higher than the second rotational speed value and lower than a third rotational speed value.

## Revendications

1. Procédé de commande d'un moteur à combustion interne, dans lequel un régulateur règle le régime du moteur à combustion interne à une valeur de consigne et prédéfinit une première grandeur qui caractérise le couple demandé par le régulateur, une deuxième grandeur, qui caractérise le couple admissible, étant prédéfinissable, la comparaison entre la première et la deuxième grandeur permettant de détecter des erreurs, la deuxième grandeur présentant, dans au moins deux plages de régime, des dépendances différentes du régime, la deuxième grandeur adoptant dans une première plage une valeur constante, la première plage étant définie par des régimes qui sont inférieurs à une deuxième valeur de régime, **caractérisé en ce que** dans une troisième plage, la deuxième grandeur dépend de la différence entre la valeur de consigne du régime et le régime, la troisième plage étant définie par des régimes qui sont supérieurs à la deuxième valeur de régime et inférieurs à une troisième valeur de régime.

2. Procédé selon la revendication 1, **caractérisé en ce que** le régulateur règle le régime du moteur à combustion interne à une valeur de consigne du régime.

3. Procédé selon la revendication 1 ou 2, **caractérisé en ce que** le régulateur régle le régime au régime de marche à vide souhaité.

4. Procédé selon l'une quelconque des revendications précédentes, **caractérisé en ce que** dans une deuxième plage, la deuxième grandeur adopte une deuxième valeur constante, la deuxième plage étant définie par des régimes qui sont supérieurs à une première valeur de régime et inférieurs à la deuxième valeur de régime.

5. Procédé selon l'une quelconque des revendications précédentes, **caractérisé en ce que** dans une quatrième plage, la deuxième grandeur adopte la valeur nulle, la quatrième plage étant définie par des régimes qui sont supérieurs à la troisième valeur de régime.

6. Dispositif de commande d'un moteur à combustion interne, dans lequel un régulateur règle le régime du moteur à combustion interne à une valeur de consigne et prédéfinit une première grandeur qui caractérise le couple demandé par le régulateur, comprenant des moyens qui prédéfinissent une deuxième grandeur qui caractérise le couple admissible, comprenant des moyens qui, à partir de la comparaison entre la première et la deuxième grandeur, détectent des erreurs, la deuxième grandeur présentant, dans au moins deux plages de régime, des dépendances différentes du régime, dans une première plage, la deuxième grandeur adoptant une valeur constante, la première plage étant définie par des régimes qui sont inférieurs à une deuxième valeur de régime, et **caractérisé en ce que** dans une troisième plage, la deuxième grandeur dépend de la différence entre la valeur de consigne du régime et le régime, la troisième plage étant définie par des régimes qui sont supérieurs à la deuxième valeur de régime et inférieurs à une troisième valeur de régime.
